# EUROPEAN PATENT SPECIFICATION

(11) **EP 4 233 349 B1**
(45) Date of publication and mention of the grant of the patent: **29.04.2026**
(21) Application number: 20958173.5
(22) Date of filing: 22.10.2020
(51) Int. Cl.: H04W 24/08, H04W 36/00

(54) **SYSTEMS AND METHODS FOR HANDLING COLLISIONS BETWEEN APERIODIC CHANNEL STATE INFORMATION REFERENCE SIGNAL (AP-CSI-RS) AND PERIODIC REFERENCE SIGNAL (RS) MEASUREMENTS**
SYSTEME UND VERFAHREN ZUR HANDHABUNG VON KOLLISIONEN ZWISCHEN APERIODISCHEN KANALZUSTANDSINFORMATIONSREFERENZSIGNALMESSUNGEN (AP-CSI-RS) UND PERIODISCHEN REFERENZSIGNALMESSUNGEN (RS)
SYSTÈMES ET PROCÉDÉS DE GESTION DE COLLISIONS ENTRE DES MESURES DE SIGNAL DE RÉFÉRENCE D'INFORMATIONS D'ÉTAT DE CANAL APÉRIODIQUE (AP-CSI-RS) ET DES MESURES DE SIGNAL DE RÉFÉRENCE (RS) PÉRIODIQUE

(43) Date of publication of application: 30.08.2023
(73) Proprietor: Apple Inc., Cupertino, CA 95014 (US)
(72) Inventor: CUI, Jie, Cupertino, CA 95014 (US); YE, Chunxuan, Cupertino, CA 95014 (US); ZHANG, Dawei, Cupertino, CA 95014 (US); SUN, Haitong, Cupertino, CA 95014 (US); HE, Hong, Cupertino, CA 95014 (US); NIU, Huaning, Cupertino, CA 95014 (US); RAGHAVAN, Manasa, Cupertino, CA 95014 (US); OTERI, Oghenekome, Cupertino, CA 95014 (US); YANG, Weidong, Cupertino, CA 95014 (US); TANG, Yang, Cupertino, CA 95014 (US); ZHANG, Yushu, Cupertino, CA 95014 (US)
(74) Representative: Lang, Johannes
(86) International application number: PCT/CN2020/122779
(87) International publication number: WO 2022/082590

(56) References cited:
- WO-A1-2020/165751
- CA-A1- 3 108 847
- CN-A- 111 247 752
- US-A1- 2019 149 365
- INTEL CORPORATION: "Ad hoc minutes for NR RRM capability, gap related requirement and beam management", vol. RAN WG4, no. Spokane, US; 20181112 - 20181116, 21 November 2018 (2018-11-21), XP051490440, Retrieved from the Internet <URL:http://www.3gpp.org/ftp/tsg%5Fran/WG4%5FRadio/TSGR4%5F89/Docs/R4%2D1816120%2Ezip> [retrieved on 20181121]

## Description

### FIELD

The present application relates to wireless devices and wireless networks, including devices, circuits, and methods for determining appropriate user equipment (UE) behavior for Aperiodic Channel State Information Reference Signal (AP-CSI-RS) for Layer 1 reference signal received power L1-RSRP measurements that are colliding with periodic Layer 3 (L3) reference signal (RS) measurements.

### BACKGROUND

Wireless communication systems are rapidly growing in usage. In recent years, wireless devices such as smart phones and tablet computers have become increasingly sophisticated. In addition to supporting telephone calls, many mobile devices now provide access to the internet, email, text messaging, and navigation using the global positioning system (GPS), and are capable of operating sophisticated applications that utilize these functionalities. Additionally, there exist numerous different wireless communication technologies and standards. Some examples of wireless communication standards include GSM, UMTS (associated with, for example, WCDMA or TD-SCDMA air interfaces), LTE, LTE Advanced (LTE-A), HSPA, 3GPP2 CDMA2000 (e.g., 1xRTT, 1xEV-DO, HRPD, eHRPD), IEEE 802.11 (WLAN or Wi-Fi), BLUETOOTH^{™}, etc.

The ever increasing number of features and functionality introduced in wireless communication devices also creates a continuous need for improvement in both wireless communications and in wireless communication devices. To increase coverage and better serve the increasing demand and range of envisioned uses of wireless communication, in addition to the communication standards mentioned above, there are further wireless communication technologies under development, including fifth generation (5G) New Radio (NR) communication. Accordingly, improvements in the field in support of such development and design are desired.

Intel Corporation, "Ad hoc minutes for NR RRM capability, gap-related requirements and beam management", dated 21 November 2018, discloses a scaling factor P and a prioritization rule used to handle collisions between RS for L1-RSRP and SMTC.

CA 3 108 847 discloses a UE behaviour when it cannot receive the SSB and CSI-RS overlapping in the same time resource, i.e. at the same time. Hence, the UE prioritizes one or the other based on the purpose of the signals, in particular the type of measurement they are used for (e.g. RRM, L1-RSRP, RLM).

### SUMMARY

The invention is defined in the appended independent claims. Embodiments of the invention are defined in the dependent claims. Aspects disclosed herein relate to devices, circuits, and methods for configuring reference signal measurement for a wireless device, comprising: determining, by a user equipment (UE), that an aperiodic channel state information reference signal (AP-CSI-RS) for Layer 1 reference signal received power (L1-RSRP) measurement occasion is overlapping with one or more Layer 3 (L3) RS measurement occasions; determining that the UE is not able to make measurements for both the AP-CSI-RS for L1-RSRP measurement occasion and the one or more overlapping L3 RS measurement occasions; and prioritizing, by the UE, making the measurement for the AP-CSI-RS for L1-RSRP measurement occasion over making the measurements for the one or more overlapping L3 RS measurement occasions.

According to other aspects, a at least one of the one or more L3 RS measurement occasions may comprise: one or more Synchronization Signal Block (SSB) symbols or CSI-RS symbols for L3 RS measurement; one data symbol before an SSB or CSI-RS symbol and one data symbol after the SSB or CSI-RS symbol; or one or more Received Signal Strength Indicator (RSSI) symbols and one data symbol before and after each RSSI symbol of the one or more RSSI symbols.

According to still other aspects, prioritizing, by the UE, making the measurement for the AP-CSI-RS for L1-RSRP measurement occasion over making the measurements for the one or more overlapping L3 RS measurement occasions further comprises prioritizing according to a scaling factor (e.g., a value representative of a multiple of a periodicity of the L1-RSRP or L3 RS measurement occasions). According to other aspects, prioritizing making the measurement for the AP-CSI-RS for L1-RSRP measurement occasion over making the measurements for the one or more overlapping L3 RS measurement occasions further comprises muting at least one L3 RS measurement occasion (e.g., in order to guarantee the receiving of the AP-CSI-RS for L1-RSRP in at least a first overlapping measurement occasion).

In other aspects, if an AP-CSI-RS for L1-RSRP is overlapping with one or more measurement gap (MG) occasions, the overlapping MGs may be prioritized over the receiving of the AP-CSI-RS for L1-RSRP measurement (e.g., by muting the AP-CSI-RS for L1-RSRP measurement).

Further aspects disclosed herein relate to devices, circuits, and methods for configuring reference signal transmission by a wireless network, comprising: determining, by the wireless network (NW), that a user equipment

(UE) is not able to make both an aperiodic channel state information reference signal (AP-CSI-RS) for Layer 1 reference signal received power (L1-RSRP) measurement and a Layer 3 (L3) RS measurement in an overlapping measurement occasion; and configuring, by the NW, the AP-CSI-RS for L1-RSRP measurement or the L3 RS measurement to avoid the overlapping measurement occasion.

According to some such aspects, configuring the AP-CSI-RS for L1-RSRP measurement or the L3 RS measurement to avoid the overlapping measurement occasion further comprises one or more of: configuring the AP-CSI-RS for L1-RSRP or the L3 RS so that the AP-CSI-RS for L1-RSRP avoids overlapping Synchronization Signal Block (SSB) symbols or CSI-RS symbols for L3 RS measurement; configuring the AP-CSI-RS for L1-RSRP or the L3 RS so the AP-CSI-RS for L1-RSRP avoids overlapping one data symbol before an SSB or CSI-RS symbol for L3 RS measurement and one data symbol after the SSB or CSI-RS symbol for L3 RS measurement; configuring the AP-CSI-RS for L1-RSRP or the L3 RS so the AP-CSI-RS for L1-RSRP avoids overlapping one or more Received Signal Strength Indicator (RSSI) symbols and one data symbol before and after each RSSI symbol of the one or more RSSI symbols; or configuring the AP-CSI-RS for L1-RSRP or the L3 RS to avoid a configuration wherein multiple AP-CSI-RS for L1-RSRP measurement occasions overlap with all L3 RS measurement occasions in a first time interval.

According to other aspects, a method for configuring reference signal (RS) transmission by a wireless network is disclosed, comprising: determining, by the wireless network (NW), that a user equipment (UE) iis not able to make both an aperiodic channel state information reference signal (AP-CSI-RS) for Layer 1 reference signal received power (L1-RSRP) measurement and a Layer 3 (L3) RS measurement in an overlapping measurement occasion; and configuring, by the NW, the AP-CSI-RS for L1-RSRP measurement or the L3 RS measurement to avoid a configuration wherein multiple AP-CSI-RS for L1-RSRP measurement occasions overlap with all L3 RS measurement occasions in a first time interval. In some such aspects, configuring the AP-CSI-RS for L1-RSRP measurement or the L3 RS measurement further comprises: changing a timing of at least one of the L3 RS measurement occasions (e.g., changing at least one of: a periodicity, an offset, or a starting point of the L3 measurement RS occasion, or a bitmap related to a Synchronization Signal Block (SSB) in the time domain).

In still other aspects, configuring the AP-CSI-RS for L1-RSRP or the L3 RS measurement further comprises: for each AP-CSI-RS for L1-RSRP measurement occasion: determining, by the NW, whether the AP-CSI-RS for L1-RSRP measurement occasion would overlap an L3 RS measurement occasion; and, when it is determined that the AP-CSI-RS for L1-RSRP measurement occasion would overlap an L3 RS measurement occasion, changing a timing of the AP-CSI-RS for L1-RSRP measurement occasion.

The techniques described herein may be implemented in and/or used with a number of different types of devices, including but not limited to cellular phones, wireless devices, wireless base stations, tablet computers, wearable computing devices, portable media players, and any of various other computing devices.

This Summary is intended to provide a brief overview of some of the subject matter described in this document. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF DRAWINGS

A better understanding of the present subject matter can be obtained when the following detailed description of various aspects is considered in conjunction with the following drawings:
Figure 1 illustrates an example wireless communication system, according to some aspects.
Figure 2 illustrates a base station (BS) in communication with a user equipment (UE) device, according to some aspects.
Figure 3 illustrates an example block diagram of a UE, according to some aspects.
Figure 4 illustrates an example block diagram of a BS, according to some aspects.
Figure 5 illustrates an example block diagram of cellular communication circuitry, according to some aspects.
Figure 6 illustrates an example block diagram of a network element, according to some aspects.
Figures 7A-7B illustrate exemplary timelines for periodic CSI-RS (P-CSI-RS) and semi-persistent CSI-RS (SP-CSI-RS) for L1-RSRP measurement, according to some aspects.
Figure 8 illustrates an exemplary timeline for aperiodic CSI-RS (AP-CSI-RS) for L1-RSRP measurement, according to some aspects.
Figures 9A-9B illustrate exemplary timelines for configuring a wireless network to avoid collisions between AP-CSI-RS for L1-RSRP and L3 RS measurement window occasions, according to some aspects.
Figure 10A is a flowchart detailing an exemplary method of UE behavior for handling collisions between AP-CSI-RS measurements for L1-RSRP and periodic L3 RS measurements, according to some aspects.
Figure 10B is a flowchart detailing an exemplary method of UE behavior for handling collisions between AP-CSI-RS measurements for L1-RSRP and measurement gaps (MGs), according to some aspects.
Figures 11A-11B are flowcharts illustrating various exemplary methods of network behaviors for handling collisions between AP-CSI-RS measurements for L1-RSRP and periodic L3 RS measurements, according to some aspects.

While the features described herein may be susceptible to various modifications and alternative forms, specific aspects thereof are shown by way of example in the drawings and are herein described in detail. It should be understood, however, that the drawings and detailed description thereto are not intended to be limiting to the particular form disclosed, but on the contrary, the intention is to cover all modifications and alternatives falling within the scope of the subject matter as defined by the appended claims.

### DETAILED DESCRIPTION

In 5G/NR, collisions between the measurements of different reference signals (RSs) (e.g., collisions caused by using overlapping measurement occasions in the time domain) is one issue that must be accounted for in an appropriate and reasonable fashion. In 3GPP TS38.133, the measurement collision between various RSs has been considered, and the considerations may be summarized as shown in Table 1, below (*see also*, *e.g*., ETSI TS 138 133 V15.8.0 (2020-02), Sections 8.5.2-8.5.3).

### Measurement Restriction and Sharing Schemes for Colliding RSs (Rel-16)

**TABLE 1**

| | **SSB-based BM/RLM** | **CSI-RS-based BM/RLM** | **SSB-based L3 measurement** | **CSI-RS-based L3 measurement** |
|---|---|---|---|---|
| **SSB-based BM/RLM** | N/A | Measurement restriction | Measurement sharing (P_{sharing} factor) | Measurement restriction |
| **CSI-RS-based BM/RLM** | Measurement restriction | Measurement restriction | Measurement sharing (P_{sharing factor})* | No changes* |
| **SSB-based L3 measurement** | Measurement sharing (P_{sharing factor}) | Measurement sharing (P_{sharing factor})* | N/A | Not defined in Rel-16 |
| **CSI-RS-based L3 measurement** | Measurement restriction | No changes* | Not defined in Rel-16 | Defined in Rel-16 using Rx beam sweep factor |

In the Table 1 cells that are marked with asterisks above, the CSI-RS used for L1-RSRP measurement could have three possible types: periodic CSI-RS (P-CSI-RS), semi-persistent CSI-RS (SP-CSI-RS), or aperiodic CSI-RS (AP-CSI-RS). Semi-persistent CSI-RS, in this context, is similar to periodic CSI-RS, however, the SP-CSI-RS are only transmitted after the network has specifically configured and activated the UE for SP-CSI-RS.

There may be some potential issues when, e.g., an AP-CSI-RS is configured for L1-RSRP and the AP-CSI-RS is colliding with one or more other RSs for L3 RRM measurement (e.g., a Synchronization Signal Block (SSB) or CSI-RS for L3 measurement). The potential issue may be observed in instances when the UE is not able to receive or take measurements of the AP-CSI-RS for L1-RSRP and the RS of L3 measurement concurrently due to, e.g., mixed numerology and/or Rx beam sweeping.

Thus, in certain wireless communications systems, it may be desirable to clearly define the preferred user device (e.g., UE) behavior with regard to measuring multiple different types of reference signals (RSs) having colliding measurement window occasions, so that the UE (with or without assistance from the network) can make reasonable measurement activities on the available RSs.

The following is a glossary of terms that may be used in this disclosure:

**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic."

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**User Equipment (UE) (also "User Device" or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g., smart watch, smart glasses), PDAs, portable Internet devices, music players, data storage devices, other handheld devices, in-vehicle infotainment (IVI), in-car entertainment (ICE) devices, an instrument cluster, head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, machine type communications (MTC) devices, machine-to-machine (M2M), internet of things (IoT) devices, etc. In general, the terms "UE" or "UE device" or "user device" can be broadly defined to encompass any electronic, computing, and/or telecommunications device (or combination of devices) that is easily transported by a user (or vehicle) and capable of wireless communication.

**Wireless Device** - any of various types of computer systems or devices that perform wireless communications. A wireless device can be portable (or mobile) or may be stationary or fixed at a certain location. A UE is an example of a wireless device.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station** - The terms "base station," "wireless base station," or "wireless station" have the full breadth of their ordinary meaning, and at least includes a wireless communication station installed at a fixed location and used to communicate as part of a wireless telephone system or radio system. For example, if the base station is implemented in the context of LTE, it may alternately be referred to as an 'eNodeB' or 'eNB'. If the base station is implemented in the context of 5G NR, it may alternately be referred to as a 'gNodeB' or 'gNB'. Although certain aspects are described in the context of LTE or 5G NR, references to "eNB," "gNB," "nodeB," "base station," "NB," etc., may refer to one or more wireless nodes that service a cell to provide a wireless connection between user devices and a wider network generally and that the concepts discussed are not limited to any particular wireless technology. Although certain aspects are described in the context of LTE or 5G NR, references to "eNB," "gNB," "nodeB," "base station," "NB," etc., are not intended to limit the concepts discussed herein to any particular wireless technology and the concepts discussed may be applied in any wireless system.

**Node** - The term "node," or "wireless node" as used herein, may refer to one more apparatus associated with a cell that provide a wireless connection between user devices and a wired network generally.

**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, individual processors, processor arrays, circuits such as an ASIC (Application Specific Integrated Circuit), programmable hardware elements such as a field programmable gate array (FPGA), as well any of various combinations of the above.

**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1Mhz wide. Other protocols and standards may include different definitions of channels. Furthermore, some standards may define and use multiple types of channels, e.g., different channels for uplink or downlink and/or different channels for different uses such as data, control information, etc.

**Band** - The term "band" has the full breadth of its ordinary meaning, and at least includes a section of spectrum (e.g., radio frequency spectrum) in which channels are used or set aside for the same purpose.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form but not be involved in the actual filling of the form (e.g., the user is not manually specifying answers to fields but rather they are being automatically completed). The present specification provides various examples of operations being automatically performed in response to actions the user has taken.

**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some aspects, "approximately" may mean within 0.1% of some specified or desired value, while in various other aspects, the threshold may be, for example, 2%, 3%, 5%, and so forth, as desired or as required by the particular application.

**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

### Example Wireless Communication System

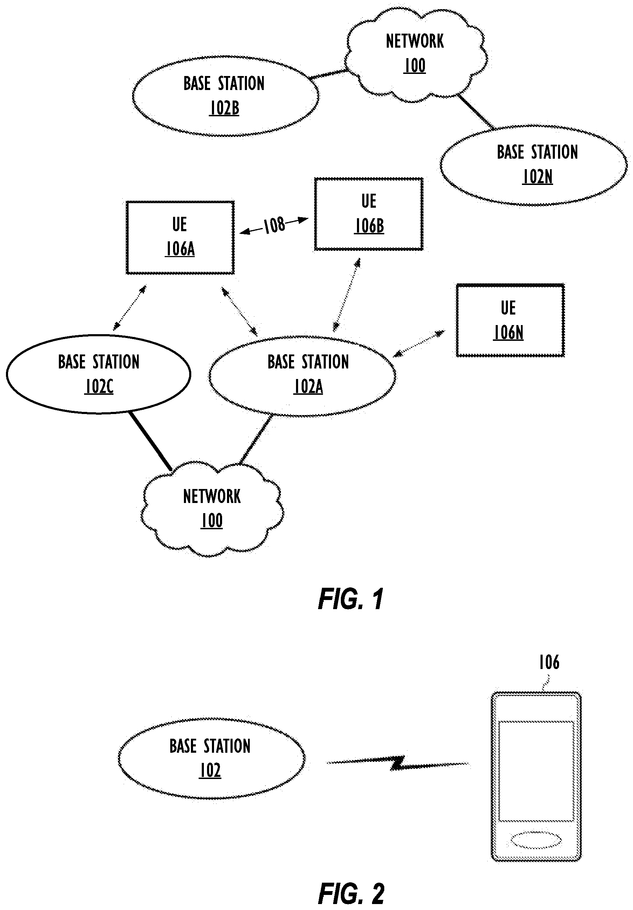

Turning now to Figure 1, a simplified example of a wireless communication system is illustrated, according to some aspects. It is noted that the system of Figure 1 is merely one example of a possible system, and that features of this disclosure may be implemented in any of various systems, as desired.

As shown, the example wireless communication system includes a base station 102A, which communicates over a transmission medium with one or more user devices 106A, 106B, etc., through 106N. Each of the user devices may be referred to herein as a "user equipment" (UE). Thus, the user devices 106 are referred to as UEs or UE devices.

The base station (BS) 102A may be a base transceiver station (BTS) or cell site (a "cellular base station") and may include hardware that enables wireless communication with the UEs 106A through 106N.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-Advanced (LTE-A), 5G new radio (5G NR), HSPA, 3GPP2 CDMA2000 (e.g., 1xRTT, 1xEV-DO, HRPD, eHRPD), etc. Note that if the base station 102A is implemented in the context of LTE, it may alternately be referred to as an 'eNodeB' or 'eNB'. Note that if the base station 102A is implemented in the context of 5G NR, it may alternately be referred to as a 'gNodeB' or 'gNB'.

In some aspects, the UEs 106 may be IoT UEs, which may comprise a network access layer designed for low-power IoT applications utilizing short-lived UE connections. An IoT UE can utilize technologies such as M2M or MTC for exchanging data with an MTC server or device via a public land mobile network (PLMN), proximity service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. As an example, vehicles to everything (V2X) may utilize ProSe features using a PC5 interface for direct communications between devices. The IoT UEs may also execute background applications (e.g., keep-alive messages, status updates, etc.) to facilitate the connections of the IoT network.

As shown, the UEs 106, such as UE 106A and UE 106B, may directly exchange communication data via a PC5 interface 108. The PC5 interface 105 may comprise one or more logical channels, including but not limited to a Physical Sidelink Shared Channel (PSSCH), a Physical Sidelink Control Channel (PSCCH), a Physical Sidelink Broadcast Channel (PSBCH), and a Physical Sidelink Feedback Channel (PSFCH).

In V2X scenarios, one or more of the base stations 102 may be or act as Road Side Units (RSUs). The term RSU may refer to any transportation infrastructure entity used for V2X communications. An RSU may be implemented in or by a suitable wireless node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like. In one example, an RSU is a computing device coupled with radio frequency circuitry located on a roadside that provides connectivity support to passing vehicle UEs (vUEs). The RSU may also include internal data storage circuitry to store intersection map geometry, traffic statistics, media, as well as applications/software to sense and control ongoing vehicular and pedestrian traffic. The RSU may operate on the 5.9 GHz Intelligent Transport Systems (ITS) band to provide very low latency communications required for high speed events, such as crash avoidance, traffic warnings, and the like. Additionally, or alternatively, the RSU may operate on the cellular V2X band to provide the aforementioned low latency communications, as well as other cellular communications services. Additionally, or alternatively, the RSU may operate as a Wi-Fi hotspot (2.4 GHz band) and/or provide connectivity to one or more cellular networks to provide uplink and downlink communications. The computing device(s) and some or all of the radio frequency circuitry of the RSU may be packaged in a weatherproof enclosure suitable for outdoor installation, and may include a network interface controller to provide a wired connection (e.g., Ethernet) to a traffic signal controller and/or a backhaul network.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B...102N) operating according to the same or a different cellular communication standard may thus be provided as a network of cells, which may provide continuous or nearly continuous overlapping service to UEs 106A-N and similar devices over a geographic area via one or more cellular communication standards.

Thus, while base station 102A may act as a "serving cell" for UEs 106AN as illustrated in Figure 1, each UE 106 may also be capable of receiving signals from (and possibly within communication range of) one or more other cells (which might be provided by base stations 102B-N and/or any other base stations), which may be referred to as "neighboring cells." Such cells may also be capable of facilitating communication between user devices and/or between user devices and the network 100. Such cells may include "macro" cells, "micro" cells, "pico" cells, and/or cells which provide any of various other granularities of service area size. For example, base stations 102A-B illustrated in Figure 1 might be macro cells, while base station 102N might be a micro cell. Other configurations are also possible.

In some aspects, base station 102A may be a next generation base station, e.g., a 5G New Radio (5G NR) base station, or "gNB." In some aspects, a gNB may be connected to a legacy evolved packet core (EPC) network and/or to a NR core (NRC) / 5G core (5GC) network. In addition, a gNB cell may include one or more transition and reception points (TRPs). In addition, a UE capable of operating according to 5G NR may be connected to one or more TRPs within one or more gNBs. For example, it may be possible that that the base station 102A and one or more other base stations 102 support joint transmission, such that UE 106 may be able to receive transmissions from multiple base stations (and/or multiple TRPs provided by the same base station). For example, as illustrated in Figure 1, both base station 102A and base station 102C are shown as serving UE 106A.

Note that a UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., GSM, UMTS (associated with, for example, WCDMA or TD-SCDMA air interfaces), LTE, LTE-A, 5G NR, HSPA, 3GPP2 CDMA2000 (e.g., 1xRTT, 1xEV-DO, HRPD, eHRPD), etc.). The UE 106 may also or alternatively be configured to communicate using one or more global navigational satellite systems (GNSS, e.g., GPS or GLONASS), one or more mobile television broadcasting standards (e.g., ATSC-M/H), and/or any other wireless communication protocol, if desired. Other combinations of wireless communication standards (including more than two wireless communication standards) are also possible.

### Example User Equipment (UE)

Figure 2 illustrates user equipment 106 (e.g., one of the devices 106A through 106N) in communication with a base station 102, according to some aspects. The UE 106 may be a device with cellular communication capability such as a mobile phone, a hand-held device, a computer, a laptop, a tablet, a smart watch or other wearable device, or virtually any type of wireless device.

The UE 106 may include a processor (processing element) that is configured to execute program instructions stored in memory. The UE 106 may perform any of the method aspects described herein by executing such stored instructions. Alternatively, or in addition, the UE 106 may include a programmable hardware element such as an FPGA (field-programmable gate array), an integrated circuit, and/or any of various other possible hardware components that are configured to perform (e.g., individually or in combination) any of the method aspects described herein, or any portion of any of the method aspects described herein.

The UE 106 may include one or more antennas for communicating using one or more wireless communication protocols or technologies. In some aspects, the UE 106 may be configured to communicate using, for example, NR or LTE using at least some shared radio components. As additional possibilities, the UE 106 could be configured to communicate using CDMA2000 (1xRTT / 1xEV-DO / HRPD / eHRPD) or LTE using a single shared radio and/or GSM or LTE using the single shared radio. The shared radio may couple to a single antenna, or may couple to multiple antennas (e.g., for MIMO) for performing wireless communications. In general, a radio may include any combination of a baseband processor, analog RF signal processing circuitry (e.g., including filters, mixers, oscillators, amplifiers, etc.), or digital processing circuitry (e.g., for digital modulation as well as other digital processing). Similarly, the radio may implement one or more receive and transmit chains using the aforementioned hardware. For example, the UE 106 may share one or more parts of a receive and/or transmit chain between multiple wireless communication technologies, such as those discussed above.

In some aspects, the UE 106 may include separate transmit and/or receive chains (e.g., including separate antennas and other radio components) for each wireless communication protocol with which it is configured to communicate. As a further possibility, the UE 106 may include one or more radios which are shared between multiple wireless communication protocols, and one or more radios which are used exclusively by a single wireless communication protocol. For example, the UE 106 might include a shared radio for communicating using either of LTE or 5G NR (or either of LTE or 1xRTT, or either of LTE or GSM, among various possibilities), and separate radios for communicating using each of Wi-Fi and Bluetooth. Other configurations are also possible.

In some aspects, a downlink resource grid can be used for downlink transmissions from any of the base stations 102 to the UEs 106, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid may comprise a number of resource blocks, which describe the mapping of certain physical channels to resource elements. Each resource block comprises a collection of resource elements. There are several different physical downlink channels that are conveyed using such resource blocks.

The physical downlink shared channel (PDSCH) may carry user data and higher-layer signaling to the UEs 106. The physical downlink control channel (PDCCH) may carry information about the transport format and resource allocations related to the PDSCH channel, among other things. It may also inform the UEs 106 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the base stations 102 based on channel quality information fed back from any of the UEs 106. The downlink resource assignment information may be sent on the PDCCH used for (e.g., assigned to) each of the UEs.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

### Example Communication Device

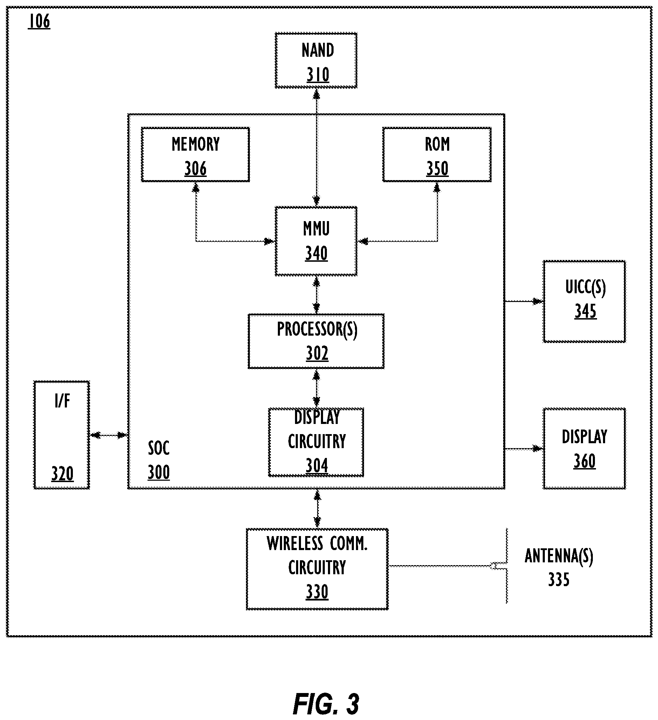

Figure 3 illustrates an example simplified block diagram of a communication device 106, according to some aspects. It is noted that the block diagram of the communication device of Figure 3 is only one example of a possible communication device. According to aspects, communication device 106 may be a user equipment (UE) device, a mobile device or mobile station, a wireless device or wireless station, a desktop computer or computing device, a mobile computing device (e.g., a laptop, notebook, or portable computing device), a tablet, and/or a combination of devices, among other devices. As shown, the communication device 106 may include a set of components 300 configured to perform core functions. For example, this set of components may be implemented as a system on chip (SOC), which may include portions for various purposes. Alternatively, this set of components 300 may be implemented as separate components or groups of components for the various purposes. The set of components 300 may be coupled (e.g., communicatively; directly or indirectly) to various other circuits of the communication device 106.

For example, the communication device 106 may include various types of memory (e.g., including NAND flash 310), an input/output interface such as connector I/F 320 (e.g., for connecting to a computer system; dock; charging station; input devices, such as a microphone, camera, keyboard; output devices, such as speakers; etc.), the display 360, which may be integrated with or external to the communication device 106, and wireless communication circuitry 330 (e.g., for LTE, LTE-A, NR, UMTS, GSM, CDMA2000, Bluetooth, Wi-Fi, NFC, GPS, etc.). In some aspects, communication device 106 may include wired communication circuitry (not shown), such as a network interface card, e.g., for Ethernet.

The wireless communication circuitry 330 may couple (e.g., communicatively; directly or indirectly) to one or more antennas, such as antenna(s) 335 as shown. The wireless communication circuitry 330 may include cellular communication circuitry and/or short to medium range wireless communication circuitry, and may include multiple receive chains and/or multiple transmit chains for receiving and/or transmitting multiple spatial streams, such as in a multiple-input multiple output (MIMO) configuration.

In some aspects, as further described below, cellular communication circuitry 330 may include one or more receive chains (including and/or coupled to (e.g., communicatively; directly or indirectly) dedicated processors and/or radios) for multiple RATs (e.g., a first receive chain for LTE and a second receive chain for 5G NR). In addition, in some aspects, cellular communication circuitry 330 may include a single transmit chain that may be switched between radios dedicated to specific RATs. For example, a first radio may be dedicated to a first RAT, e.g., LTE, and may be in communication with a dedicated receive chain and a transmit chain shared with a second radio. The second radio may be dedicated to a second RAT, e.g., 5G NR, and may be in communication with a dedicated receive chain and the shared transmit chain. In some aspects, the second RAT may operate at mmWave frequencies. As mmWave systems operate in higher frequencies than typically found in LTE systems, signals in the mmWave frequency range are heavily attenuated by environmental factors. To help address this attenuating, mmWave systems often utilize beamforming and include more antennas as compared LTE systems. These antennas may be organized into antenna arrays or panels made up of individual antenna elements. These antenna arrays may be coupled to the radio chains.

The communication device 106 may also include and/or be configured for use with one or more user interface elements. The user interface elements may include any of various elements, such as display 360 (which may be a touchscreen display), a keyboard (which may be a discrete keyboard or may be implemented as part of a touchscreen display), a mouse, a microphone and/or speakers, one or more cameras, one or more buttons, and/or any of various other elements capable of providing information to a user and/or receiving or interpreting user input.

The communication device 106 may further include one or more smart cards 345 that include SIM (Subscriber Identity Module) functionality, such as one or more UICC(s) (Universal Integrated Circuit Card(s)) cards 345.

As shown, the SOC 300 may include processor(s) 302, which may execute program instructions for the communication device 106 and display circuitry 304, which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, wireless communication circuitry 330, connector I/F 320, and/or display 360. The MMU 340 may be configured to perform memory protection and page table translation or set up. In some aspects, the MMU 340 may be included as a portion of the processor(s) 302.

As noted above, the communication device 106 may be configured to communicate using wireless and/or wired communication circuitry. As described herein, the communication device 106 may include hardware and software components for implementing any of the various features and techniques described herein. The processor 302 of the communication device 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the communication device 106, in conjunction with one or more of the other components 300, 304, 306, 310, 320, 330, 340, 345, 350, 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 302.

Further, as described herein, wireless communication circuitry 330 may include one or more processing elements. In other words, one or more processing elements may be included in wireless communication circuitry 330. Thus, wireless communication circuitry 330 may include one or more integrated circuits (ICs) that are configured to perform the functions of wireless communication circuitry 330. In addition, each integrated circuit may include circuitry (e.g., first circuitry, second circuitry, etc.) configured to perform the functions of wireless communication circuitry 330.

### Example Base Station

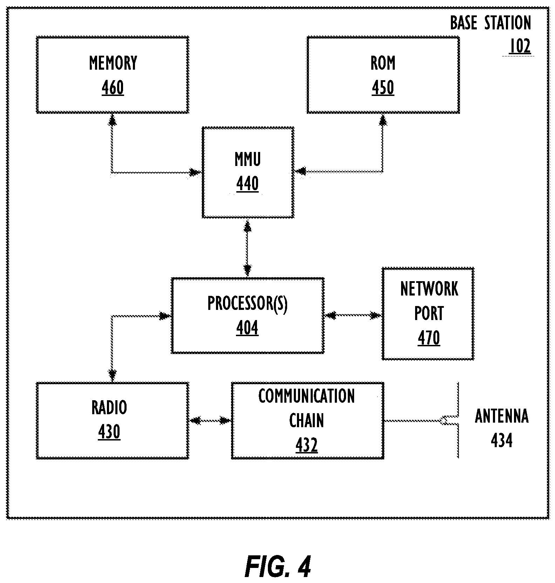

Figure 4 illustrates an example block diagram of a base station 102, according to some aspects. It is noted that the base station of Figure 4 is merely one example of a possible base station. As shown, the base station 102 may include processor(s) 404 which may execute program instructions for the base station 102. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The base station 102 may include at least one network port 470. The network port 470 may be configured to couple to a telephone network and provide a plurality of devices, such as UE devices 106, access to the telephone network as described above in Figures 1 and 2.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

In some aspects, base station 102 may be a next generation base station, e.g., a 5G New Radio (5G NR) base station, or "gNB." In such aspects, base station 102 may be connected to a legacy evolved packet core (EPC) network and/or to a NR core (NRC) / 5G core (5GC) network. In addition, base station 102 may be considered a 5G NR cell and may include one or more transition and reception points (TRPs). In addition, a UE capable of operating according to 5G NR may be connected to one or more TRPs within one or more gNBs.

The base station 102 may include at least one antenna 434, and possibly multiple antennas. The at least one antenna 434 may be configured to operate as a wireless transceiver and may be further configured to communicate with UE devices 106 via radio 430. The antenna 434 communicates with the radio 430 via communication chain 432. Communication chain 432 may be a receive chain, a transmit chain or both. The radio 430 may be configured to communicate via various wireless communication standards, including, but not limited to, 5G NR, LTE, LTE-A, GSM, UMTS, CDMA2000, Wi-Fi, etc.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5G NR. In such a case, the base station 102 may be capable of operating as both an LTE base station and a 5G NR base station. When the base station 102 supports mmWave, the 5G NR radio may be coupled to one or more mmWave antenna arrays or panels. As another possibility, the base station 102 may include a multi-mode radio, which is capable of performing communications according to any of multiple wireless communication technologies (e.g., 5G NR and LTE, 5G NR and Wi-Fi, LTE and Wi-Fi, LTE and UMTS, LTE and CDMA2000, UMTS and GSM, etc.).

As described further subsequently herein, the BS 102 may include hardware and software components for implementing or supporting implementation of features described herein. The processor 404 of the base station 102 may be configured to implement or support implementation of part or all of the methods described herein, e.g., by executing program instructions stored on a memory medium (e.g., a non-transitory computer readable memory medium). Alternatively, the processor 404 may be configured as a programmable hardware element, such as an FPGA (Field Programmable Gate Array), or as an ASIC (Application Specific Integrated Circuit), or a combination thereof. Alternatively (or in addition) the processor 404 of the BS 102, in conjunction with one or more of the other components 430, 432, 434, 440, 450, 460, 470 may be configured to implement or support implementation of part or all of the features described herein.

In addition, as described herein, processor(s) 404 may include one or more processing elements. Thus, processor(s) 404 may include one or more integrated circuits (ICs) that are configured to perform the functions of processor(s) 404. In addition, each integrated circuit may include circuitry (e.g., first circuitry, second circuitry, etc.) configured to perform the functions of processor(s) 404.

Further, as described herein, radio 430 may include one or more processing elements. Thus, radio 430 may include one or more integrated circuits (ICs) that are configured to perform the functions of radio 430. In addition, each integrated circuit may include circuitry (e.g., first circuitry, second circuitry, etc.) configured to perform the functions of radio 430.

### Example Cellular Communication Circuitry

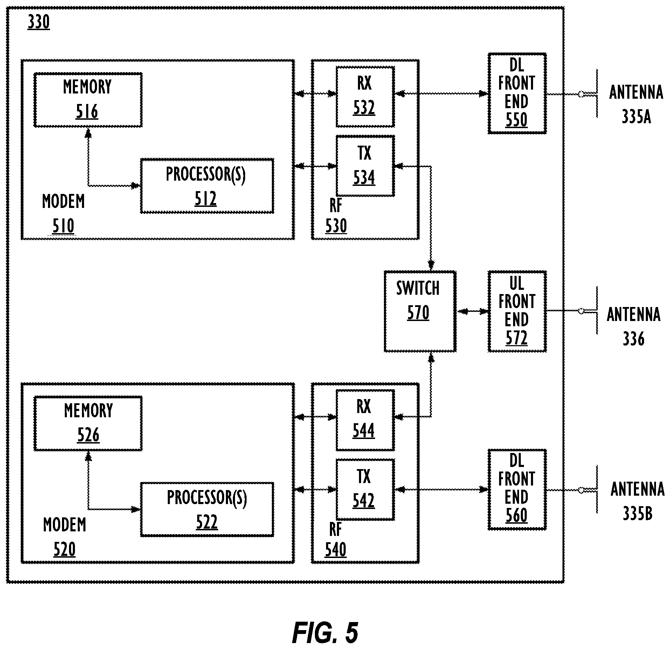

Figure 5 illustrates an example simplified block diagram of cellular communication circuitry, according to some aspects. It is noted that the block diagram of the cellular communication circuitry of Figure 5 is only one example of a possible cellular communication circuit; other circuits, such as circuits including or coupled to sufficient antennas for different RATs to perform uplink activities using separate antennas, or circuits including or coupled to fewer antennas, e.g., that may be shared among multiple RATs, are also possible. According to some aspects, cellular communication circuitry 330 may be included in a communication device, such as communication device 106 described above. As noted above, communication device 106 may be a user equipment (UE) device, a mobile device or mobile station, a wireless device or wireless station, a desktop computer or computing device, a mobile computing device (e.g., a laptop, notebook, or portable computing device), a tablet and/or a combination of devices, among other devices.

The cellular communication circuitry 330 may couple (e.g., communicatively; directly or indirectly) to one or more antennas, such as antennas 335a-b and 336 as shown. In some aspects, cellular communication circuitry 330 may include dedicated receive chains (including and/or coupled to (e.g., communicatively; directly or indirectly) dedicated processors and/or radios) for multiple RATs (e.g., a first receive chain for LTE and a second receive chain for 5G NR). For example, as shown in Figure 5, cellular communication circuitry 330 may include a first modem 510 and a second modem 520. The first modem 510 may be configured for communications according to a first RAT, e.g., such as LTE or LTE-A, and the second modem 520 may be configured for communications according to a second RAT, e.g., such as 5G NR.

As shown, the first modem 510 may include one or more processors 512 and a memory 516 in communication with processors 512. Modem 510 may be in communication with a radio frequency (RF) front end 530. RF front end 530 may include circuitry for transmitting and receiving radio signals. For example, RF front end 530 may include receive circuitry (RX) 532 and transmit circuitry (TX) 534. In some aspects, receive circuitry 532 may be in communication with downlink (DL) front end 550, which may include circuitry for receiving radio signals via antenna 335a.

Similarly, the second modem 520 may include one or more processors 522 and a memory 526 in communication with processors 522. Modem 520 may be in communication with an RF front end 540. RF front end 540 may include circuitry for transmitting and receiving radio signals. For example, RF front end 540 may include receive circuitry 542 and transmit circuitry 544. In some aspects, receive circuitry 542 may be in communication with DL front end 560, which may include circuitry for receiving radio signals via antenna 335b.

In some aspects, a switch 570 may couple transmit circuitry 534 to uplink (UL) front end 572. In addition, switch 570 may couple transmit circuitry 544 to UL front end 572. UL front end 572 may include circuitry for transmitting radio signals via antenna 336. Thus, when cellular communication circuitry 330 receives instructions to transmit according to the first RAT (e.g., as supported via the first modem 510), switch 570 may be switched to a first state that allows the first modem 510 to transmit signals according to the first RAT (e.g., via a transmit chain that includes transmit circuitry 534 and UL front end 572). Similarly, when cellular communication circuitry 330 receives instructions to transmit according to the second RAT (e.g., as supported via the second modem 520), switch 570 may be switched to a second state that allows the second modem 520 to transmit signals according to the second RAT (e.g., via a transmit chain that includes transmit circuitry 544 and UL front end 572).

As described herein, the first modem 510 and/or the second modem 520 may include hardware and software components for implementing any of the various features and techniques described herein. The processors 512, 522 may be configured to implement part or all of the features described herein, e.g., by executing program instructions stored on a memory medium (e.g., a non-transitory computer-readable memory medium). Alternatively (or in addition), processors 512, 522 may be configured as a programmable hardware element, such as an FPGA (Field Programmable Gate Array), or as an ASIC (Application Specific Integrated Circuit). Alternatively (or in addition) the processors 512, 522, in conjunction with one or more of the other components 530, 532, 534, 540, 542, 544, 550, 570, 572, 335 and 336 may be configured to implement part or all of the features described herein.

In addition, as described herein, processors 512, 522 may include one or more processing elements. Thus, processors 512, 522 may include one or more integrated circuits (ICs) that are configured to perform the functions of processors 512, 522. In addition, each integrated circuit may include circuitry (e.g., first circuitry, second circuitry, etc.) configured to perform the functions of processors 512, 522.

In some aspects, the cellular communication circuitry 330 may include only one transmit/receive chain. For example, the cellular communication circuitry 330 may not include the modem 520, the RF front end 540, the DL front end 560, and/or the antenna 335b. As another example, the cellular communication circuitry 330 may not include the modem 510, the RF front end 530, the DL front end 550, and/or the antenna 335a. In some aspects, the cellular communication circuitry 330 may also not include the switch 570, and the RF front end 530 or the RF front end 540 may be in communication, e.g., directly, with the UL front end 572.

### Example Network Element

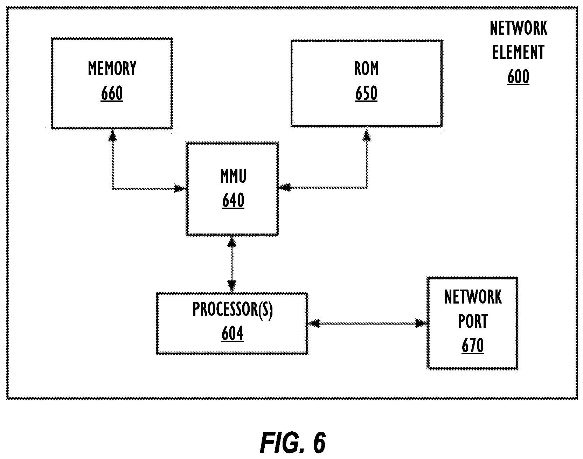

Figure 6 illustrates an exemplary block diagram of a network element 600, according to some aspects. According to some aspects, the network element 600 may implement one or more logical functions/entities of a cellular core network, such as a mobility management entity (MME), serving gateway (S-GW), access and management function (AMF), session management function (SMF), network slice quota management (NSQM) function, etc. It is noted that the network element 600 of Figure 6 is merely one example of a possible network element 600. As shown, the core network element 600 may include processor(s) 604 which may execute program instructions for the core network element 600. The processor(s) 604 may also be coupled to memory management unit (MMU) 640, which may be configured to receive addresses from the processor(s) 604 and translate those addresses to locations in memory (e.g., memory 660 and read only memory (ROM) 650) or to other circuits or devices.

The network element 600 may include at least one network port 670. The network port 670 may be configured to couple to one or more base stations and/or other cellular network entities and/or devices. The network element 600 may communicate with base stations (e.g., eNBs/gNBs) and/or other network entities / devices by means of any of various communication protocols and/or interfaces.

As described further subsequently herein, the network element 600 may include hardware and software components for implementing and/or supporting implementation of features described herein. The processor(s) 604 of the core network element 600 may be configured to implement or support implementation of part or all of the methods described herein, e.g., by executing program instructions stored on a memory medium (e.g., a nontransitory computer-readable memory medium). Alternatively, the processor 604 may be configured as a programmable hardware element, such as an FPGA (Field Programmable Gate Array), or as an ASIC (Application Specific Integrated Circuit), or a combination thereof.

### Resource Signal Measurement Collision Avoidance Schemes

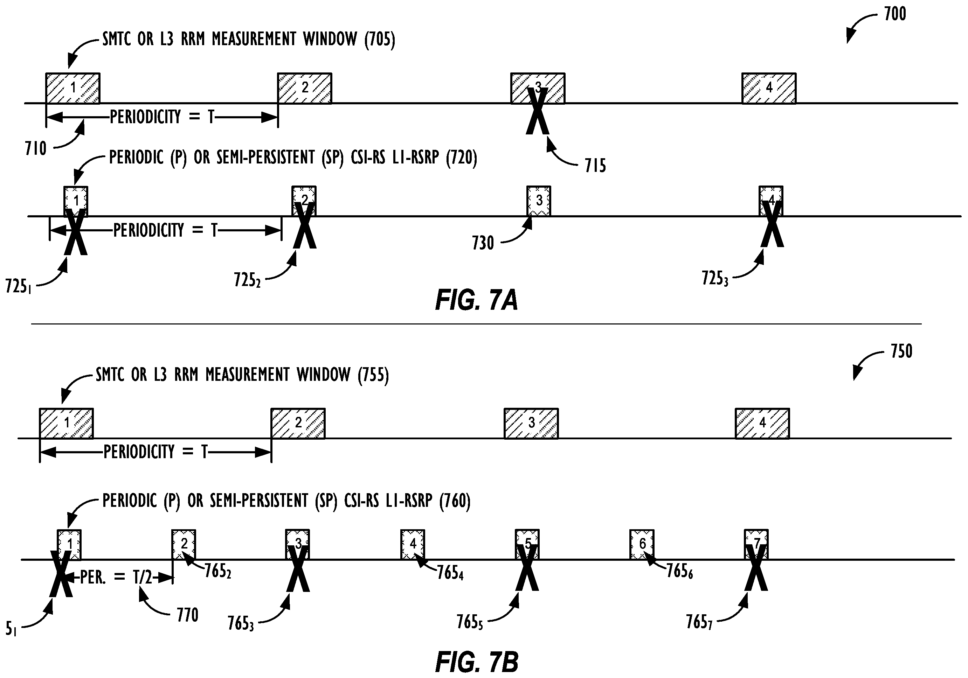

Turning now to Figures 7A-7B, exemplary timelines 700/750 for periodic CSI-RS (P-CSI-RS) and semi-persistent CSI-RS (SP-CSI-RS) for L1-RSRP measurement are illustrated, according to some aspects. The top timeline in Figure 7A reflects a number of four consecutive SSB-based Radio Resource Management (RRM) Measurement Timing Configuration window (i.e., SMTC) or L3 RRM measurement occasion windows 705. The windows 705 are labeled consecutively: 1, 2, 3, 4, and each is separated by one time period, having a periodicity, T (710). Although four SMTC or L3 RRM measurement windows are shown in Figure 7A for illustrative purposes, it is to be understood that additional measurement windows, e.g., 5 or 6, or more measurement windows, may be utilized in the computation of a single L3 RS measurement (e.g., via a time averaging operation).

The bottom timeline in Figure 7A reflects periodic (P) or semi-persistent (SP) CSI-RS L1-RSRP measurement occasion windows 720. The windows 720 are also labeled consecutively: 1, 2, 3, 4, and each is separated by one time period, having the same periodicity, T, as the SMTC/L3 measurement occasion windows 705. The L1-RSRP measurement is one measurement activity of beam management (BM) in NR. Because the measurement occasion windows for SMTC/L3 and L1-RSRP may collide (i.e., overlap with one another in the time domain), it is important that sharing principles are established so that each type of RS may be adequately monitored by a UE.

For example, the main sharing principles established in NR comprise: (1) L1-RSRP cannot be performed in measurement gap (MG) durations; (2) if L1-RSRP RS occasions are partially overlapped with SMTC or L3 measurements, the L1-RSRP measurements on those occasions should be performed outside the SMTC/L3 measurement windows; and 3) if L1-RSRP RS measurement windows are fully overlapped with the SMTC/L3 measurement windows, then the L1-RSRP measurement can use 1 occasion out of every n occasions (where, e.g., n = 2 or 3, or some other integer), while the L3 measurement will use the other n-1 occasions on the time domain.

These sharing principles, however, are mainly for P-CSI-RS or SP-CSI-RS based L1-RSRP situations, because the P-CSI-RS or SP-CSI-RS can be available periodically on the time domain. If, for example, a UE chooses to do an L3 RS measurement instead of an L1-RSRP measurement in one or more measurement window occasions, the UE can still have chance to do an L1-RSRP measurement in some other measurement window occasion(s) on time domain.

In the particular example shown in Figure 7A, the L3 and L1 measurement window occasions are fully overlapped with one another (i.e., they coincide in the time domain at each measurement window occasion). Thus, according to some aspects, the UE may use measurement window occasion 3 (730) to do the L1-RSRP measurement and mute the L1-RSRP measurement on occasion 1 (7251) and 2 (7252), so the scaling factor, P, for the L1-RSRP measurement delay in this examples would be P = 3. In other words, the third L3 measurement window occasion (715) is muted (i.e., canceled or failed), meaning that the UE has to wait 3 periodicities before completing its L1-RSRP measurement at measurement window occasion 3 (730). (Note: The first period of waiting is not illustrated in Figure 7A, and would be the period immediately prior to the first measurement occasion windows 705/720 shown in the timeline example of Figure 7A and labeled with '1's.)

Turning now to Figure 7B, the timeline 750 shows a scenario wherein the SMTC/L3 measurement occasion windows 755 occur with the same periodicity, T, as in Figure 7A, but wherein the periodic (P) or semi-persistent (SP) CSI-RS L1-RSRP measurement occasion windows 760 have a shorter periodicity (770), which, in this case, is defined as T/2. As such, there are twice as many possible P-CSI-RS or SP-CSI-RS measurement occasion windows as there are SMTC/L3 measurement occasion windows. Thus, according to some aspects, a UE may determine to perform the L1-RSRP measurements outside the SMTC/L3 measurement windows. In other words, the scaling factor, P, value for the L1-RSRP measurement delay is 2 in the example of Figure 7B (i.e., the UE has to wait 2 periodicities before completing its L1-RSRP measurement, e.g., taking measurements at measurement window occasions 2 (7652), 4 (7654), 6 (7656), and so forth, while canceling its L1-RSRP measurements at measurement window occasions 1 (765₁), 3 (765₃), 5 (765₅), and so forth).

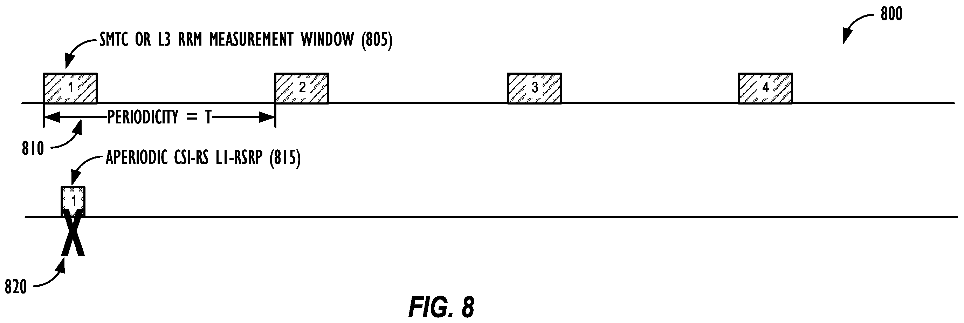

Turning now to Figure 8, an exemplary timeline 800 for aperiodic CSI-RS (AP-CSI-RS) for L1-RSRP measurement is illustrated, according to the invention. As with Figure 7A/7B, the SMTC/L3 measurement occasion windows 805 occur with the same periodicity, T, but the L1-RSRP measurement occasion windows are aperiodic, i.e., as shown by AP-CSI-RS (820). As may now be appreciated, when the CSI-RS for L1-RSRP measurement is AP-CSI-RS, there is no need to differentiate between fully or partially overlapped L3/L1 measurement window occasions, and the UE also has no other chances or opportunities to do its L1-RSRP measurement if it chooses to mute the AP-CSI-RS measurement that is colliding with the L3 RRM measurement window, as is shown at muted AP-CSI-RS for L1-RSRP measurement window occasion 820 (unless, as will be described in greater detail below, the network reconfigures this AP-CSI-RS for the UE for L1-RSRP measurement to occur at some different time). In order to address this issue, it is desirable to clearly define the default UE behavior, so that the UE can make reasonable measurement activities on the available RSs.

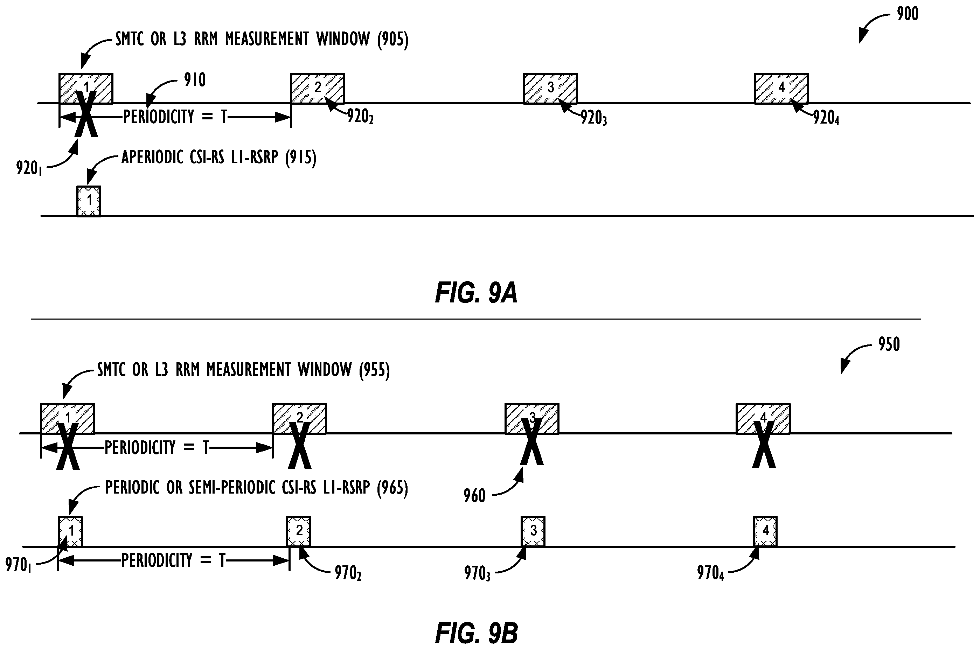

Turning now to Figures 9A-9B, exemplary timelines 900/950 for configuring a wireless network to avoid collisions between AP-CSI-RS for L1-RSRP measurement window occasions and L3 RS measurement window occasions are illustrated, according to some aspects. As mentioned above, in some aspects, it may be desirable for the network to configure either the AP-CSI-RS for L1-RSRP measurement and/or the L3 measurement to avoid collisions in the time domain. As shown on the top line of timeline 900 of Figure 9A, the SMTC/L3 measurement occasion windows 905 occur with the same periodicity, T (910), and the L1-RSRP measurement occasion windows are aperiodic, e.g., AP-CSI-RS for L1-RSRP measurement occasion window 915. In the example shown in Figure 9A, the network has determined to mute only a first one of the L3 RS measurement occasion windows, 920₁. By muting this single L3 RS measurement occasion, 920₁, the L3 RS measurements can still be conducted in the rest of the measurement occasion windows that are not colliding with AP-CSI-RS for L1-RSRP measurement occasions, e.g., the L3 RS measurement occasion windows 920₂, 920₃, and 920₄, and so forth. As will be explained in further detail below, the network could also change a timing of the L3 measurement occasion and/or the AP-CSI-RS for L1-RSRP measurement occasion (e.g., in terms of periodicity, start time, offset, etc.) to avoid the collision with the AP-CSI-RS for L1-RSRP.

By contrast, in the example of timeline 950 shown in Figure 9B, all of the L3 RS measurement occasion windows 955 are muted due to collision with AP-CSI-RS for L1-RSRP measurement occasions 970 (i.e., in this case, the network has individually configured multiple AP-CSI-RSs for L1-RSRP that each happen to conflict with an L3 RS measurement occasion window). In such a case, the L3 RS measurement will be failed due to not being able to obtain enough measurements and, therefore, the network should strive to avoid this configuration, when possible.

### Exemplary UE and NW Methods for Resource Signal Measurement Collision Avoidance

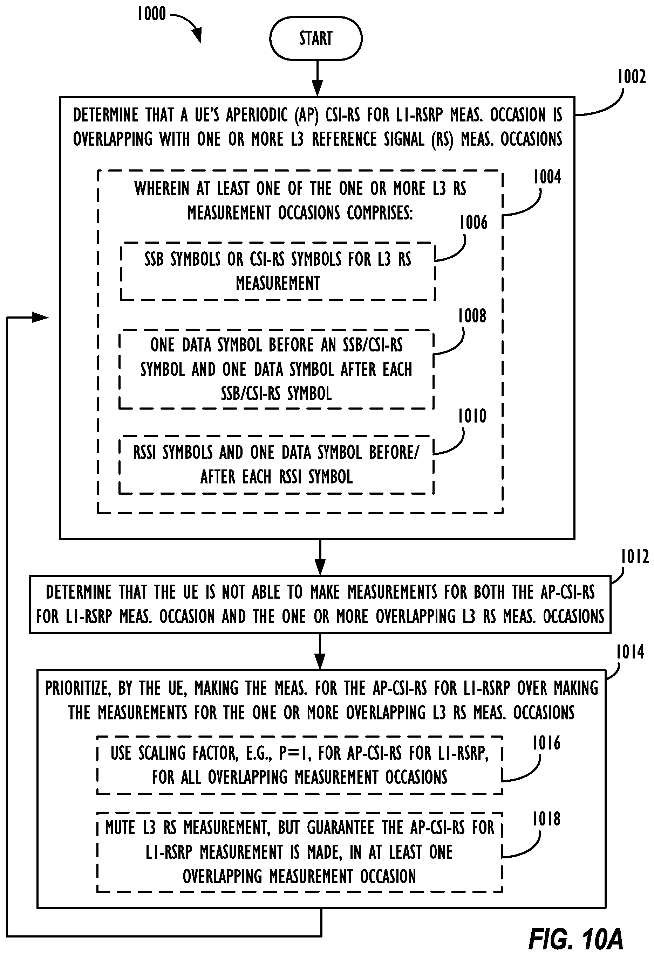

Turning first to Figure 10A, a flowchart 1000 is show, detailing an exemplary method of UE behavior for handling collisions between AP-CSI-RS measurements for L1-RSRP and periodic L3 RS measurements, according to some aspects. Method 1000 may begin by a UE determining that its AP-CSI-RS for L1-RSRP measurement occasion is overlapping with one or more L3 reference signals (RS) measurement occasions (Step 1002). According to some aspects, at Step 1004, at least one of the one or more L3 RS measurement occasions may comprise: one or more Synchronization Signal Block (SSB) symbols or CSI-RS symbols for L3 RS measurement (Step 1006); one data symbol before an SSB or CSI-RS symbol and one data symbol after the SSB or CSI-RS symbol (Step 1008); or one or more Received Signal Strength Indicator (RSSI) symbols and one data symbol before and after each RSSI symbol (Step 1010).

Next, the method 1000 may determine that the UE is not able to make measurements for both the AP-CSI-RS for L1-RSRP measurement occasion and the one or more overlapping L3 RS measurement occasions (Step 1012). If operating in Frequency Range 1 (FR1), i.e., between 410 MHz to 7125 MHz, the UE may be unable to receive both RSs simultaneously, e.g., because of an inability to support mixed numerology, which would be required due to the different subcarrier spacing (SCS) typically used between AP-CSI-RS for L1-RSRP measurements and the RSs of L3 measurements. If operating in Frequency Range 2 (FR2), i.e., between 24250 MHz to 52600 MHz, it may be assumed that the UE is unable to receive both RSs simultaneously due to Rx beam differences (e.g., L1 may use a different beam than L3, and the UE may not be able to receive both signals at the same time). There may also be other reasons why a UE is unable to receive both RSs simultaneously.

Finally, at Step 1014, the method 1000 may prioritize, by the UE, making the measurement for the AP-CSI-RS for L1-RSRP over making the measurements for the one or more overlapping L3 RS measurement occasions. For example, according to some aspects, the UE may prioritize according to a scaling factor, P (Step 1016). As described above, according to the invention, the scaling factor, P, comprises a multiple of a periodicity of the L3 RS or L1-RSRP measurement occasions. For example, the scaling factor may have a value of P = 1, or 2, or 3 (and so forth), meaning that UE will wait for either 1, or 2, or 3 measurements occasions, respectively, to make the L1-RSRP measurement. According to other aspects, the UE may mute at least one L3 RS measurement occasion (Step 1018). For example, according to some aspects, by muting the at least one L3 RS measurement occasion, the UE may guarantee the receiving of the AP-CSI-RS for L1-RSRP in at least one overlapping measurement occasion (Step 1018). The operation of method 1000 may then continue, by returning to Step 1002 and continuing to monitor for RS measurement collisions for so long as the UE is actively attempting to make RS measurements.

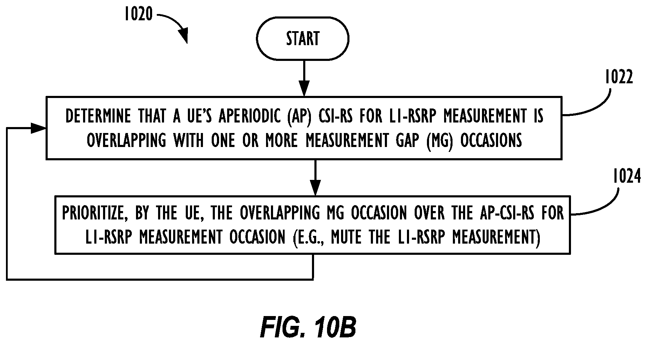

Turning now to Figure 10B, a flowchart 1020, detailing an exemplary method of UE behavior for handling collisions between AP-CSI-RS measurements for L1-RSRP and measurement gaps (MGs), is illustrated, according to the invention. Method 1020 begins by determining that a UE's AP-CSI-RS for L1-RSRP measurement is overlapping with one or more MG occasions (Step 1022). Next, i.e., in response to determining that the UE's AP-CSI-RS for L1-RSRP measurement is overlapping with one or more measurement gap occasions, the method 1020 may prioritize, by the UE, the overlapping MG occasion over the AP-CSI-RS for L1-RSRP measurement occasion (i.e., rather than simply time shifting or delaying the L1-RSRP measurement) (Step 1024). According to some aspects, the prioritization may entail, e.g., muting or canceling the L1-RSRP measurement completely.

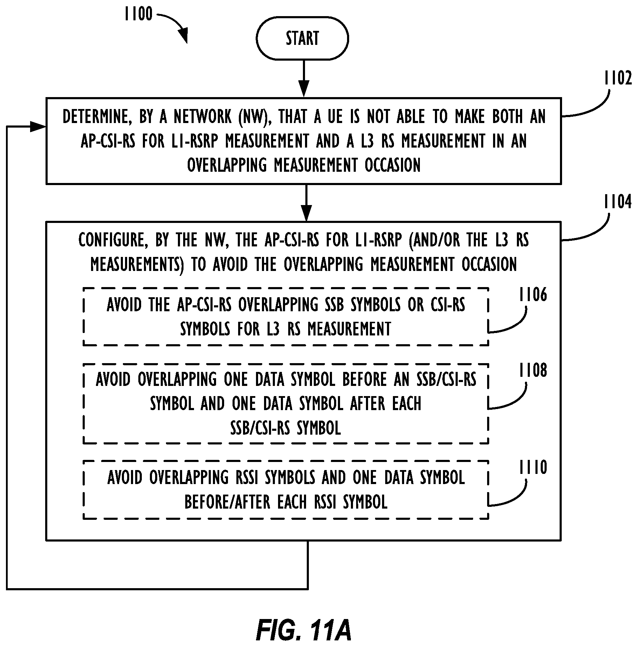

Figures 11A-11B are flowcharts illustrating various exemplary methods of network behaviors for handling collisions between AP-CSI-RS measurements for L1-RSRP and periodic L3 RS measurements, according to some aspects. Turning first to Figure 11A, a method 1100 may begin by determining, by a wireless network (NW), that a UE is not able to make both an AP-CSI-RS for L1-RSRP measurement and a L3 RS measurement in an overlapping measurement occasion (Step 1102). Next, in response to determining that the UE is not able to make both an AP-CSI-RS for L1-RSRP measurement and a L3 RS measurement in an overlapping measurement occasion, the NW may configure either the AP-CSI-RS for L1-RSRP or the L3 measurement RS to avoid the overlapping measurement occasion (Step 1104). For example, according to some aspects, the NW may avoid the overlapping measurement occasion by: configuring the AP-CSI-RS for L1-RSRP or the L3 RS measurement to cause the AP-CSI-RS to avoid overlapping Synchronization Signal Block (SSB) symbols or CSI-RS symbols for L3 RS measurements in the time domain (Step 1106); configuring the AP-CSI-RS for L1-RSRP or the L3 measurement RS to avoid overlapping one data symbol before an SSB or CSI-RS symbol and one data symbol after the SSB or CSI-RS symbol (Step 1108); and/or configuring the AP-CSI-RS for L1-RSRP or the L3 measurement RS to avoid overlapping one or more Received Signal Strength Indicator (RSSI) symbols and one data symbol before and after each RSSI symbol of the one or more RSSI symbols (Step 1110). The operation of method 1100 may then continue, by returning to Step 1102 and the NW continuing to monitor for RS measurement collisions, e.g., for so long as there are UEs actively attempting to make RS measurements.

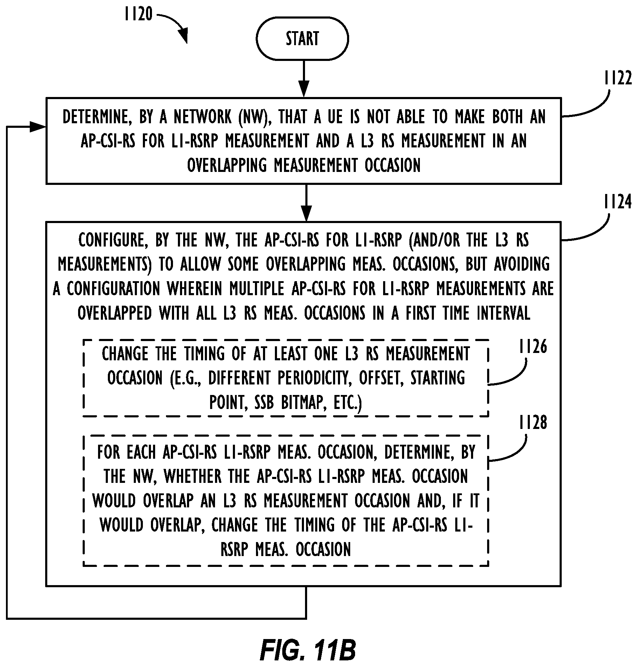

Turning now to Figure 11B, another method 1120 of network behavior for handling collisions between AP-CSI-RS measurements for L1-RSRP and periodic L3 RS measurements is illustrated. First, at Step 1122, the method 1120 may begin by determining, by a wireless network (NW), that a UE is not able to make both an AP-CSI-RS for L1-RSRP measurement and a L3 RS measurement in an overlapping measurement occasion. Next, in response to determining that the UE is not able to make both an AP-CSI-RS for L1-RSRP measurement and a L3 RS measurement in an overlapping measurement occasion, the NW may configure either the AP-CSI-RS for L1-RSRP or the L3 measurement RS to allow some overlapping measurement occasions, but avoid a configuration wherein multiple AP-CSI-RS for L1-RSRP measurements are overlapped with all L3 RS measurement occasions over a first time interval (e.g., over the course of 5 particular, consecutive L3 RS measurement occasions) (Step 1124).

According to some aspects, configuring the AP-CSI-RS for L1-RSRP or the L3 measurement RS may further comprises changing a timing of at least one of the L3 RS measurement occasions (Step 1126). For example, changing the timing of the L3 RS measurement occasion may comprise changing at least one of: a periodicity, an offset, a bitmap related to the SSB in the time domain, or a starting point of the L3 RS measurement occasion.

According to other aspects, configuring the AP-CSI-RS for L1-RSRP or the L3 measurement RS may further comprise, for each AP-CSI-RS measurement occasion for L1-RSRP: determining, by the NW, whether the AP-CSI-RS for L1-RSRP measurement occasion would overlap an L3 RS measurement occasion and, when it is determined that the AP-CSI-RS for L1-RSRP measurement occasion would overlap an L3 RS measurement occasion, changing a timing of the AP-CSI-RS for L1-RSRP measurement occasion (e.g., via any of the aforementioned methods of timing changing, such as changing a periodicity, an offset, or a starting point, etc. of the AP-CSI-RS for L1-RSRP measurement occasion or a bitmap related to the SSB in the time domain), so as to avoid the L3 RS measurement collision for the UE. The operation of method 1120 may then continue, by returning to Step 1122 and the NW continuing to monitor for RS measurement collisions, e.g., for so long as there are UEs actively attempting to make RS measurements.

It is noted that the dashed line boxes in Figures 10-11 in this application indicate the optionality of such steps or features. Moreover, it is to be understood that, one or more of the UE-based techniques for avoiding RS measurement collisions detailed in Figures 10A-10B may be combined with any one or more of the NW-based techniques for avoiding RS measurement collisions detailed in Figures 11A-11B, so as to further improve the RS measurements of UEs within the wireless network.

Aspects of the present disclosure may be realized in any of various forms. For example, some aspects may be realized as a computer-implemented method, a computer-readable memory medium, or a computer system. Other aspects may be realized using one or more custom-designed hardware devices such as ASICs. Still other aspects may be realized using one or more programmable hardware elements such as FPGAs.

In some aspects, a non-transitory computer-readable memory medium may be configured so that it stores program instructions and/or data, where the program instructions, if executed by a computer system, cause the computer system to perform a method, e.g., any of a method aspects described herein, or, any combination of the method aspects described herein, or, any subset of any of the method aspects described herein, or, any combination of such subsets.

In some aspects, a device (e.g., a UE 106, a BS 102, a network element 600) may be configured to include a processor (or a set of processors) and a memory medium, where the memory medium stores program instructions, where the processor is configured to read and execute the program instructions from the memory medium, where the program instructions are executable to implement any of the various method aspects described herein (or, any combination of the method aspects described herein, or, any subset of any of the method aspects described herein, or, any combination of such subsets). The device may be realized in any of various forms.

Although the aspects above have been described in considerable detail, numerous variations and modifications will become apparent to those skilled in the art once the above disclosure is fully appreciated. It is intended that the following claims be interpreted to embrace all such variations and modifications, as long as they fall within the scope of said claims.

## Claims

1. A method for configuring reference signal, RS, measurement for a wireless device (106), comprising:
determining (1022), by the wireless device (106), that an aperiodic channel state information reference signal, AP-CSI-RS (820), for Layer 1 reference signal received power (L1-RSRP) measurement occasion is overlapping with one or more Layer 3 (L3) RS measurement occasions;
determining, by the wireless device (106), that the wireless device (106) is not able to make measurements for both the AP-CSI-RS (820) for L1-RSRP measurement occasion and the one or more overlapping L3 RS measurement occasions;
**characterized by**
making a measurement of an AP-CSI-RS (820) without making a measurement of an L3 RS during the one or more overlapping L3 RS measurement occasions,
wherein making the measurement of the AP-CSI-RS (820) without making the measurement of an L3 RS during the one or more overlapping L3 RS measurement occasions further comprises making a measurement of at least one L3 RS according to a scaling factor, and wherein the scaling factor comprises a multiple of a periodicity of the L3 RS measurement occasions.

2. The method of claim 1, wherein at least one of the one or more L3 RS measurement occasions comprises: one or more Synchronization Signal Block, SSB, symbols or CSI-RS symbols for L3 RS measurement.

3. The method of claim 1, wherein at least one of the one or more L3 RS measurement occasions comprises: one data symbol before an SSB or CSI-RS symbol and one data symbol after the SSB or CSI-RS symbol.

4. The method of claim 1, wherein at least one of the one or more L3 RS measurement occasions comprises: one or more Received Signal Strength Indicator, RSSI, symbols and one data symbol before and after each RSSI symbol of the one or more RSSI symbols.

5. The method of claim 1, wherein the scaling factor is set to a value of 2 or more multiples of the periodicity of the L3 RS measurement occasions,

6. The method of claim 1, wherein making, by the wireless device, the measurement of the AP-CSI-RS (820) without making the measurement of the L3 RS during the one or more overlapping L3 RS measurement occasions further comprises muting at least one L3 RS measurement occasion.

7. The method of claim 6, further comprising guaranteeing the receiving of the AP-CSI-RS (820) for L1-RSRP in a first overlapping measurement occasion.

8. A wireless device (106) comprising:
an antenna (335);
a radio (430) operably coupled to the antenna (335); and
a processor (302) operably coupled to the radio (430), wherein the wireless device (106) is configured to:
perform any of the methods of claims 1-7.

9. A non-volatile computer-readable medium that stores instructions that, when executed by a computer associated with the wireless device (106) of claim 8, cause the wireless device to perform any of the methods of claims 1-7.

## Patentansprüche

1. Verfahren zum Konfigurieren einer Referenzsignal-, RS-, Messung für eine drahtlose Vorrichtung (106), umfassend:
Bestimmen (1022), durch die drahtlose Vorrichtung (106), dass ein aperiodisches Kanalzustandsinformations-Referenzsignal, AP-CSI-RS (820), für eine Schicht-1-Referenzsignal-Empfangsleistungs-, L1-RSRP-, Messgelegenheit mit einer oder mehreren Schicht-3-, L3-, RS-Messgelegenheiten überlappt;
Bestimmen, durch die drahtlose Vorrichtung (106), dass die drahtlose Vorrichtung (106) nicht in der Lage ist, Messungen sowohl für das AP-CSI-RS (820) für die L1-RSRP-Messgelegenheit als auch für die eine oder die mehreren überlappenden L3-RS-Messgelegenheiten durchzuführen;
**gekennzeichnet durch**
Durchführen einer Messung eines AP-CSI-RS (820) ohne Durchführen einer Messung eines L3-RS während der einen oder der mehreren überlappenden L3-RS-Messgelegenheiten, wobei das Durchführen der Messung des AP-CSI-RS (820) ohne Durchführen der Messung eines L3-RS während der einen oder der mehreren überlappenden L3-RS-Messgelegenheiten ferner das Durchführen einer Messung mindestens eines L3-RS gemäß einem Skalierungsfaktor umfasst, und wobei der Skalierungsfaktor ein Vielfaches einer Periodizität der L3-RS-Messgelegenheiten umfasst.

2. Verfahren nach Anspruch 1, wobei mindestens eine der einen oder der mehreren L3-RS-Messgelegenheiten umfasst: ein oder mehrere Synchronisationssignalblock-, SSB-, Symbole oder CSI-RS-Symbole für die L3-RS-Messung.

3. Verfahren nach Anspruch 1, wobei mindestens eine der einen oder der mehreren L3-RS-Messgelegenheiten umfasst: ein Datensymbol vor einem SSB- oder CSI-RS-Symbol und ein Datensymbol nach dem SSB- oder CSI-RS-Symbol.

4. Verfahren nach Anspruch 1, wobei mindestens eine der einen oder der mehreren L3-RS-Messgelegenheiten umfasst: ein oder mehrere Empfangssignalstärkeindikator-, RSSI-, Symbole und ein Datensymbol vor und nach jedem RSSI-Symbol des einen oder der mehreren RSSI-Symbole.

5. Verfahren nach Anspruch 1, wobei der Skalierungsfaktor auf einen Wert von 2 oder mehr Vielfachen der Periodizität der L3-RS-Messgelegenheiten eingestellt wird.

6. Verfahren nach Anspruch 1, wobei das Durchführen der Messung des AP-CSI-RS (820) durch die drahtlose Vorrichtung, ohne die Messung des L3RS während der einen oder der mehreren überlappenden L3-RS-Messgelegenheiten durchzuführen, ferner das Stummschalten mindestens einer L3-RS-Messgelegenheit umfasst.

7. Verfahren nach Anspruch 6, ferner umfassend das Garantieren des Empfangs des AP-CSI-RS (820) für L1-RSRP in einer ersten überlappenden Messgelegenheit.

8. Drahtlose Vorrichtung (106), umfassend:
eine Antenne (335);
eine Funkvorrichtung (430), die betriebsfähig mit der Antenne (335) gekoppelt ist; und einen Prozessor (302), der betriebsfähig mit der Funkvorrichtung (430) gekoppelt ist, wobei die drahtlose Vorrichtung (106) konfiguriert ist zum:
Durchführen eines der Verfahren nach den Ansprüchen 1-7.

9. Nichtflüchtiges computerlesbares Medium, das Anweisungen speichert, die, wenn sie von einem Computer ausgeführt werden, der der drahtlosen Vorrichtung (106) nach Anspruch 8 zugeordnet ist, die drahtlose Vorrichtung veranlassen, eines der Verfahren nach den Ansprüchen 1-7 durchzuführen.

## Revendications

1. Un procédé de configuration de mesure de signal de référence, RS, pour un dispositif sans fil (106), comprenant :
la détermination (1022), par le dispositif sans fil (106), qu'un signal de référence d'information d'état de canal apériodique, AP-CSI-RS (820), pour une occasion de mesure de puissance reçue de signal de référence Layer 1 (L1-RSRP) chevauche une ou plusieurs occasions de mesure de RS Layer 3 (L3) ;
la détermination, par le dispositif sans fil (106), que le dispositif sans fil (106) n'est pas apte à réaliser des mesures à la fois pour l'AP-CSI-RS (820) pour l'occasion de mesure L1-RSRP et les une ou plusieurs occasions de mesure de RS L3 chevauchantes ;
**caractérisé par**
la réalisation d'une mesure d'un AP-CSI-RS (820) sans réaliser de mesure d'un RS L3 lors des une ou plusieurs occasions de mesure de RS L3 chevauchantes,
dans lequel la réalisation de la mesure de l'AP-CSI-RS (820) sans réaliser de mesure d'un RS L3 pendant les une ou plusieurs occasions de mesure de RS L3 chevauchantes comprend en outre la réalisation d'une mesure d'au moins un RS L3 selon un facteur d'échelle, et dans lequel le facteur d'échelle comprend un multiple d'une périodicité des occasions de mesure de RS L3.

2. Le procédé selon la revendication 1, dans lequel au moins l'une des une ou plusieurs occasions de mesure de RS L3 comprend : un ou plusieurs symboles de bloc de signal de synchronisation, SSB, ou symboles CSI-RS pour la mesure de RS L3.

3. Le procédé selon la revendication 1, dans lequel au moins l'une des une ou plusieurs occasions de mesure de RS L3 comprend : un symbole de données avant un symbole SSB ou CSI-RS et un symbole de données après le symbole SSB ou CSI-RS.

4. Le procédé selon la revendication 1, dans lequel au moins l'une des une ou plusieurs occasions de mesure de RS L3 comprend : un ou plusieurs symboles d'indicateur d'intensité de signal reçu, RSSI, et un symbole de données avant et après chaque symbole RSSI des un ou plusieurs symboles RSSI.

5. Le procédé selon la revendication 1, dans lequel le facteur d'échelle est établi sur une valeur de 2 ou plus multiples de la périodicité des occasions de mesure de RS L3.

6. Le procédé selon la revendication 1, dans lequel la réalisation, par le dispositif sans fil, de la mesure de l'AP-CSI-RS (820) sans réaliser de mesure de RS L3 pendant les une ou plusieurs occasions de mesure de RS L3 chevauchantes comprend en outre l'inhibition d'au moins une occasion de mesure de RS L3.

7. Le procédé selon la revendication 6, comprenant en outre la garantie de la réception de l'AP-CSI-RS (820) pour L1-RSRP lors d'une première occasion de mesure chevauchantes.

8. Un dispositif (106) sans fil comprenant:
une antenne (335) ;
une radio (430) couplée en fonctionnement à l'antenne (335) ; et
un processeur (302) couplé en fonctionnement à la radio (430), dans lequel le dispositif sans fil (106) est configuré pour :
réaliser l'un des procédés selon les revendications 1 à 7.

9. Un support non volatil lisible par calculateur qui stocke des instructions qui, lorsqu'elles sont exécutées par un calculateur associé au dispositif sans fil (106) selon la revendication 8, amènent le dispositif sans fil à réaliser l'un des procédés selon les revendications 1 à 7.
